# EUROPEAN PATENT SPECIFICATION

(11) **EP 2 717 286 B1**
(45) Date of publication and mention of the grant of the patent: **22.07.2015**
(21) Application number: 12187529.8
(22) Date of filing: 05.10.2012
(51) Int. Cl.: H01H 27/06, B60R 25/021

(54) **Antireturn system for activating a function or an element of an automotive vehicle**
Rückschlagsystem zur Aktivierung einer Funktion oder eines Elements eines Kraftfahrzeugs
Système anti retour destiné à activer une fonction ou un élément de véhicule automobile

(43) Date of publication of application: 09.04.2014
(73) Proprietor: U-Shin France SAS, 94046 Créteil Cedex (FR)
(72) Inventor: Della Fiorentina, Alix, 94046 Créteil CEDEX (FR); Poggi, Patrice, 94046 Créteil Cedex (FR)
(74) Representative: Huisman, Aurélien

(56) References cited:
- FR-A- 1 579 015
- FR-A1- 2 965 230
- FR-A5- 2 115 879

## Description

The invention relates to an antireturn system for preventing an operating organ of an automotive vehicle to reach an operating position and an antitheft device for a steering column lock for an automotive vehicle comprising said antireturn system.

Document FR 2115879 discloses a prior art ignition switch. Furthermore, it is known from the document FR2965230 antitheft devices for steering column of an automotive vehicle.

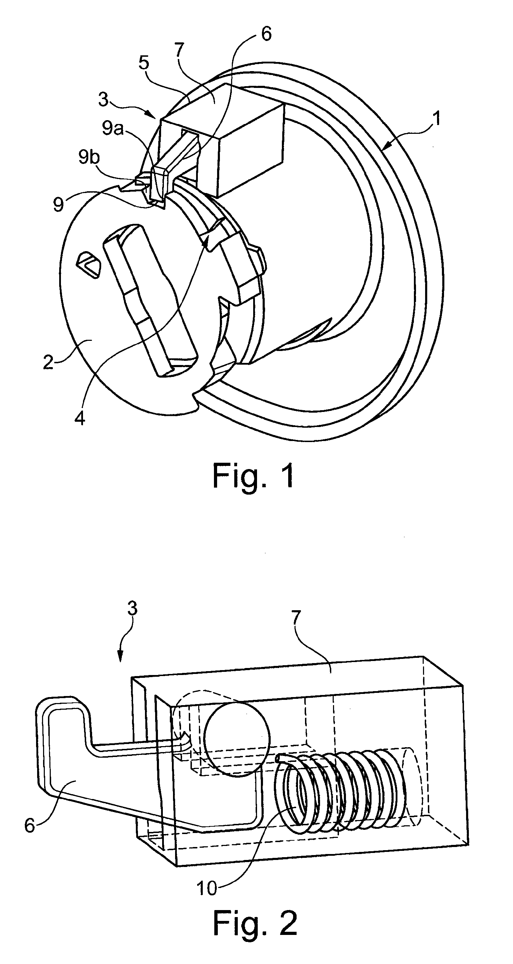

Such antitheft device is shown in figure 1.

The antitheft device comprises a lock 1 intended to receive a key.

The said lock 1 is capable of having three positions STOP, ON and START.

The lock 1 is rotationally fixed with a cam 2 which is connected to the starter (not shown) for making this latter start. The starter enables to set off the thermal engine when activated by its own motor.

At a resting position of the automotive vehicle, the lock is in the STOP position wherein there is no electrical supply coming from the battery of the automotive vehicle. The lock passes from the STOP position to the ON position. In the ON position, an electrical switch enabling the electrical supply, coming from the battery, to the different circuits and organs of the vehicle. When the lock is in the ON position, the correct key makes the lock rotate to the third position START. In this position, the starter via the cam sets off the engine. However, elastic means enable to pass from this START position to the ON position. Indeed, the starter and the thermal engine may be deteriorated if the lock stays too longer in this position.

Therefore, any other electrical supply made by the user to the thermal engine whereas the said thermal engine has been already started causes an issue by the damage of the starter or the thermal engine itself.

The antitheft device of the prior art comprises an antireturn system 3 comprising a reception surface 4 made in one of the side wall of the cam 2 and an operating finger 6 carried by a support 7. The finger 6 is configured to cooperate with the surface of the reception surface 4 thanks to elastic means 10 (see figure 2) in such a way that the finger 6 follows a path 11 created in or on the cam 2 and delimited by appropriate walls 12.

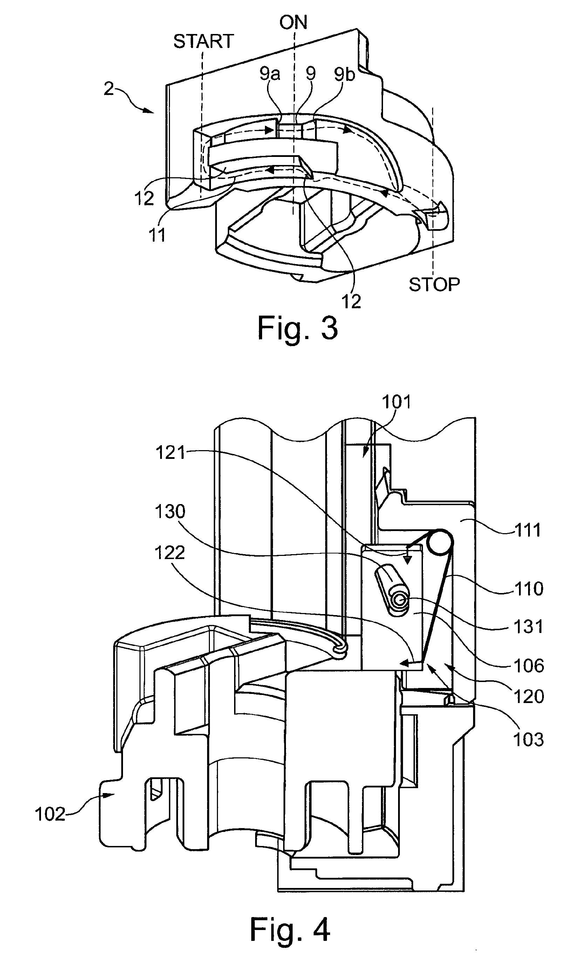

When an authorized key is inserted in the lock 1 but not rotated, the finger 6 is in the STOP position (see figure 3). When the key rotates from the STOP position to the ON position, the finger follows the path 11 according to one determined direction for reaching the START position at the same time the key is rotated to this final position.

Then, after the engine is on, the key goes back elastically to the ON position. During this course, the finger 6 goes through the START position and falls into a hole 9 delimited by a straight wall 9a and a sloping wall 9b. Thanks to the walls 9a and 9 configuration, the finger 6 cannot return back to the START position and has to move on towards the STOP position.

In special circumstances, such finger 6 undergoes high torsion force which results in the loss of the contact between the finger and the reception surface. In such a case, it is possible for the cam to be placed unwillingly in the ON position by the user.

Although this antitheft device presents a lot of advantage, there is a need for a more resistant anti-return system, especially to torsion force, more compact and less dependent of the fabrication of the operating organ reception surface.

According to one aspect, the present invention has for object an antireturn system according to claim 1.

The antireturn system of the invention enables a reliable and efficient permanent contact between the control device and the reception surface even in case of high torsion forces applied to the control device. As a consequent, the operating organ is obliged to move according to the course defined by the cooperation between the control device and the reception surface. The said operating organ cannot reach the unwilling operating position in an efficient and reliable way.

The permanent contact with the surface of the operating organ element lets the anti-return system to be free from the fabrication defaults of the reception surface and thus enables an assembly of the antireturn system easier and cheaper.

Furthermore, the antireturn system of the present invention is compact.

The present invention may also comprise the additional following features taken alone or in combination:
- the permanent contact between the control device and the reception surface forms sensibly a line or a plane,
- the control device has a spherical, cubic or elongated shape,
- the at least one elastic means is in contact with the control device through at least a surface contact and/or several punctual contacts,
- each elastic means comprises one or more springs, especially hairpin spring,
- the hole is placed through the control device and the pin is placed on the support,
- the antireturn system according to the invention is constituted by the control device cooperating with the reception surface, the support and the elastic means.

The invention also relates an antitheft device for steering column lock of an automotive vehicle comprising :
- a lock which are able to rotate between a neutral position and a third position through a second position,
- an operating organ being a cam intended to be fixed in rotation with the lock for activating operating function according to the position of the lock, and
- an antireturn system according to any preceding claims configured to cooperate with the operating organ for preventing the said operating organ to reach an operating position.

The cam may comprise a longitudinal axis and the reception surface comprises two different ways for receiving the control device course, the said two ways being disposed against each other according the longitudinal axis.

The present invention will be better understood at the light of the following description given as an example and illustrated by the followings figures:
- Figure 1 is a schematic perspective view of the antireturn system according to a prior art;
- Figure 2 is a schematic perspective view of a finger in a support with elastic means of the antireturn system of figure 1;
- Figure 3 is a perspective view of the reception surface of the operating organ according to the antireturn system of figure 1;
- Figure 4 is a perspective view of antireturn system according to an embodiment of the invention;
- Figure 5 is a perspective view of the reception surface of the operating organ according to the embodiment of figure 4.

On all figures, the identical elements are referenced by the same number.

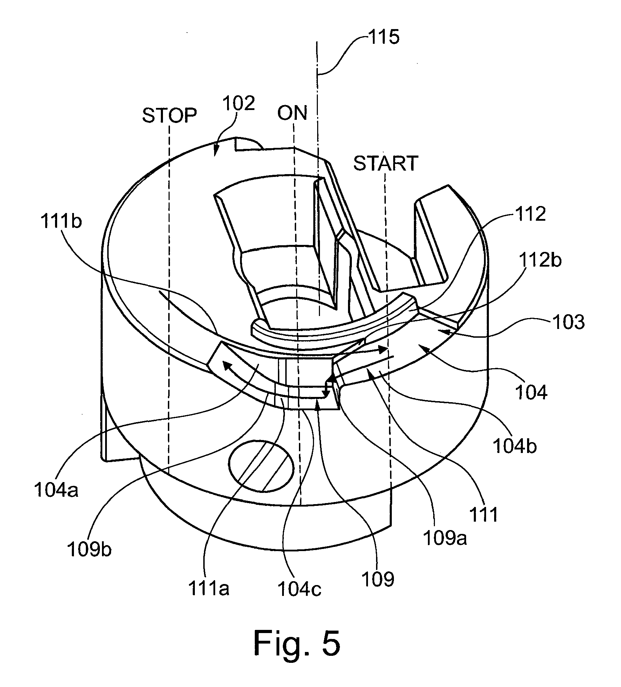

The antireturn system illustrated in figures 4 and 5 comprises an operating organ of an automotive vehicle as being a cam 102. The said cam 102 is intended to be fixed in rotation with the lock for activating operating function according to the position of the lock. In particular, the cam 102 cooperates with means locking a steering column lock, such as a sliding bar (not shown).

The operating organ may be any other element of the vehicle which is movable either rotably or slidably and comprises a reception surface on which a control device is able to follow.

According to the present embodiment, the cam 102 is rotationally connected to the lock 101 which is rotated by a key inserted into the lock by the user.

The operating organ, here the cam 102, is movable between several positions. These positions have to be reached according to a precise order in order to avoid damage of other elements of the automotive vehicle.

In the case of the illustrated embodiment, the cam 102 by following the rotation of the lock 101 may take at least three positions: a neutral position OFF, a second position ON and a third position START (see figure 5).

After going through the position ON which makes the thermal engine motor sets off, the said cam 102 has to go firstly to the START and then to a position at least near the STOP position before reaching again the ON position. This path is symbolized by the dotted line 111.

The antireturn system 103 of the present invention enables the operating organ, here the cam 102, not to reach the unwilling operating position. The operating position may be any position which enables to operate a function, such as set off the engine or supplying the battery.

In this perspective, the antireturn system 103 of the present invention comprises a reception surface 104 made of at least one wall of the operating organ, here the cam 102, and a control device 106 intended to cooperate with the said reception surface 104 in so that the operating organ 106 is prevented from reaching an operating position. The said anti-return system 103 also comprises elastic means 110 carried by a support 111. The said elastic means 111 are configured to cooperate with the control device 106 by applying at least two perpendicular forces 121 and 122 on the said control device 106 for making a permanent contact between latter 106 and the reception surface 104.

Thanks to the forces 121 and 122 of different directions applied to the control device 106, this latter is permanently in contact with the surface of the reception surface 104. In case of torsion forces on the control device 106, the elastic means 121 and 122 are able to compensate so as to keep the control device 106 always in contact with the reception surface 104.

Therefore, the contact between the reception surface 104 and the control device 106 is permanent, reliable and efficient so as to enable the control device 106 to follow a predetermined course on the reception surface 104.

The permanent contact with the surface 104 lets the anti-return system 103 of the invention to be free from the fabrication defaults since the elastic means are able to compensate any defaults due to the manufacture.

The assembly of the antireturn system 103 of the present invention is thus easier and cheaper than the one of the prior art.

Furthermore, the antireturn system103 of the present invention is compact. Few pieces are needed. In case, the antireturn device of the present invention is constituted by the control device cooperating with the reception surface, the support and the elastic means. No other piece is needed than the control device 106, the support 111 and the elastic means 110.

The reception surface 104 is configured for forcing the control device 106 to move in one determined direction. According to the embodiment shown in figure 5, the cam 102 comprises a longitudinal axis 115 and the reception surface 104 comprises at least two different paths 111a and 111b for receiving the control device course, the said at least two paths 111a and 111b are disposed against each other according to the longitudinal axis 115.

For forming the desired course of the control device 106, the reception surface 104 may comprise an area delimited by straight walls 109a and at least a sloping wall, preferably one sloping wall 109b. Such configuration creates a hole 109. The hole 109 thus forces the control device 106 to go to the direction of the sloping wall in order to get the control device 106 out of the hole 109. The control device 106 is then obliged to follow the path 111a.

The reception surface 104 may be formed by surfaces formed at different level and linked together so as to create a path 111 that the control device 106 will have to follow. As shown in the specific embodiment, illustrated in figure 5, the reception surface 104 presents an upper surface 104a , an intermediate surface 104b and a below surface 104c.

The intermediate surface 104b is delimited by walls 112 which prevent the control device 106 from going up to the upper surface 104a. In other words, the control device 106 is obliged to go down or to stay on the intermediate surface 104b.

The below surface 104c is also delimited by walls 112, 109. One of the wall 109b is configured for enabling the control device 106 to reach the upper surface 104a. However, the control device 106 cannot reach the intermediate surface 104b after the said control device 106 went on the below surface 104c.

Some slopes 112b and 109b may guide the course of the control device 106.

Other means may be used for guiding the course of the control device 106.

Preferably, the permanent contact between the control device 106 and the reception surface 104 forms sensibly a line or a plane. The permanent contact is therefore not punctual but wide enough for enabling a good cooperation between the control device 106 and the reception surface 104.

The control device 106 may have a spherical, cubic or any elongated shape which enables a surface contact.

As example, the control device 106 may be a bowl or a plate as shown in figure 4. The control device 106 may be in any type of material suitable for supporting torsion force, such as stainless steel.

The antireturn system 103 of the present invention also comprises at least one elastic means 110. The elastic means 110 may be for example one or several springs arranged in such a way so as to apply at least two perpendicular forces 121 and 122 on the control device 106. The said spring may be a torsion or a compression spring. According to the embodiment shown in figure 3, the elastic means may be an hairpin spring. The said elastic means 110 are attached to the support 111.

The said support 111 and the control device 106 are fixed in rotation in the reference of the antitheft device while the operating organ, here the cam 102 is moving in rotation according to its longitudinal axis 115.

The said support 111 comprises a recess 120 for receiving the elastic means 110 and the control device 106. The recess 120 is configured for enabling the motion of the control device 106 when this latter is following the reception surface 104.

The support 111 may be made in a specifically resistant material, such as Zamak ®. Zamac® is an alloy comprising zinc and alloying elements of aluminium, magnesium and copper.

Advantageously, the support 111 is fixed to the control device 106 by fixing means enabling relative motion between the said control device and the said support..

Advantageously, the fixing means comprise an elongated hole associated to a pin capable of coming through the said hole. The hole may be placed through the control device and the pin is placed on the support.

As shown in figure 4, the hole 130 is made through the control device 106 and the pin 131 is fixed to the inside of the support 111.

The pin 131 may be made in steel.

When employed in the antitheft device according to the invention, the antireturn system 103 works as follows.

When the key is not introduced in the lock 101, the control device 106 is in the rest position at the upper surface 104a.

When the user introduces the key and starts to rotate this key from the STOP position to the ON position, the said control device 106 follows this upper surface 104a until the intermediate surface 104b. The intermediate surface 104b is delimited by three straight walls 112 preventing the control device 106 from going back to the upper surface 104a. When the control device 106 falls on the intermediate surface 104a, the key is in the ON position.

When the user keeps moving the rotation of the key until the ON position, the control device 106 is obliged to follow the intermediate surface 104b until one side not delimited by a wall. The said control device 106 is guided by a sloped wall 112b. Therefore, the control device 106 is obliged to fall in the hole 109, on the below surface 104c. When the control device 106 reaches the below surface 104c, the key is in the ON position.

The said below surface 104c is delimited by two straight walls 109a preventing the said control device 106 to reach again the intermediate surface 104b which would make the cam 102 back to the ON position.

When the key comes back to the START position after the ON position, the control device 106 follows the sloping wall 109b until the upper surface 104a for reaching a position at least near to the STOP position. The cam 102 is back to the rest position.

## Claims

1. Antireturn system (103) for preventing an operating organ (102) of an automotive vehicle to reach an operating position, the said antireturn system (103) comprising a reception surface (104) made in at least one wall of the operating organ (102) and a control device (106) intended to cooperate with the said reception surface (104) in so that the operating organ (102) is prevented from reaching an operating position, wherein the said anti-return system (103) comprises also elastic means (110) carried by a support (111) and configured to cooperate with the control device (102) by applying at least two perpendicular forces (121, 122) on the control device (106) for making a permanent contact between the said control device (106) and the reception surface (104) wherein the support (111) of the elastic means (110) is fixed to the control device (106) by fixing means (130, 131) enabling relative motion between the said control device (106) and the said support (111) and the fixing means (130, 131) comprises an elongated hole (130) associated to a pin (131) capable of coming through the said hole (130).

2. Antireturn system (103) according to claim 1, wherein the permanent contact between the control device (106) and the reception surface (104) forms sensibly a line or a plane.

3. Antireturn system (103) according to claim 2 wherein the control device (106) has a spherical, cubic or elongated shape.

4. Antireturn system (103) according to any of the previous claims, wherein the at least one elastic means (110) is in contact with the control device (106) through at least a surface contact and/or several punctual contacts.

5. Antireturn system (103) according to any of the previous claims, wherein each elastic means (110) comprises one or more springs, especially hairpin spring.

6. Antireturn system (103) according to the previous claim, wherein the hole (130) is placed through the control device (106) and the pin (131) is placed on the support (111).

7. Antireturn system (103) according to the previous claim, wherein it is constituted by the control device (106) cooperating with the reception surface (104), the support (111) and the elastic means (110).

8. Antitheft device for steering column lock of an automotive vehicle comprising:
- a lock (101) which are able to rotate between a neutral position (STOP) and a third position (START) through a second position (ON),
- an operating organ (102) being a cam (102) intended to be fixed in rotation with the lock (101) for activating operating function according to the position of the lock, and
- an antireturn system (103) according to any preceding claims configured to cooperate with the operating organ (102) for preventing the said operating organ to reach an operating position.

9. Antitheft device according to the previous claim wherein the cam (102) comprises a longitudinal axis and the reception surface comprises two different ways for receiving the control device course, the said two ways being disposed against each other according the longitudinal axis.

## Patentansprüche

1. Rückschlagsystem (103), um zu verhindern, dass ein Betriebsorgan (102) eines Kraftfahrzeugs eine Betriebsposition erreicht, wobei das Rückschlagsystem (103) eine Aufnahmefläche (104) umfasst, die in mindestens einer Wand des Betriebsorgans (102) hergestellt ist, und eine Steuervorrichtung (106), die ausgelegt ist, um mit der Aufnahmefläche (104) derart zusammenzuarbeiten, dass das Betriebsorgan (102) daran gehindert wird, die Betriebsposition zu erreichen, wobei das Rückschlagsystem (103) auch ein elastisches Mittel (110) umfasst, das von einer Stütze (111) getragen wird, und konfiguriert ist, um mit der Steuervorrichtung (102) durch die Anwendung von mindestens zwei senkrechten Kräften (121, 122) auf die Steuervorrichtung (106) zusammenzuarbeiten, um einen permanenten Kontakt zwischen der Steuervorrichtung (106) und der Aufnahmefläche (104) herzustellen, wobei die Stütze (111) des elastischen Mittels (110) an die Steuervorrichtung (106) durch Befestigungsmittel (130, 131) befestigt ist, die eine relative Bewegung zwischen der Steuervorrichtung (106) und der Stütze (111) ermöglichen, und das Befestigungsmittel (130, 131) ein verlängertes Loch (130) umfasst, das mit einem Stift (131) assoziiert ist, der dazu in der Lage ist, durch das Loch (130) zu verlaufen.

2. Rückschlagsystem (103) nach Anspruch 1, wobei ein permanenter Kontakt zwischen der Steuervorrichtung (106) und der Aufnahmefläche (104) im Wesentlichen eine Linie oder eine Ebene bildet.

3. Rückschlagsystem (103) nach Anspruch 2, wobei die Steuervorrichtung (106) eine sphärische, kubische oder verlängerte Form aufweist.

4. Rückschlagsystem (103) nach einem der vorhergehenden Ansprüche, wobei das mindestens eine elastische Mittel (110) in Kontakt mit der Steuervorrichtung (104) durch mindestens einen Oberflächenkontakt und/oder mehrere punktuelle Kontakte steht.

5. Rückschlagsystem (103) nach einem der vorhergehenden Ansprüche, wobei jedes elastische Mittel (110) eine oder mehrere Federn umfasst, insbesondere Haarnadelfedern.

6. Rückschlagsystem (103) nach dem vorhergehenden Anspruch, wobei das Loch (130) durch die Steuervorrichtung (106) angeordnet ist und der Stift (131) auf der Stütze (111) angeordnet ist.

7. Rückschlagsystem (103) nach einem der vorhergehenden Ansprüche, wobei es aus der Steuervorrichtung (106) besteht, die mit der Aufnahmefläche (104), der Stütze (111) und dem elastischen Mittel (110) zusammenarbeitet.

8. Diebstahlsicherung für Lenksäulenschloss eines Kraftfahrzeugs, umfassend:
- ein Schloss (101), das dazu in der Lage ist, sich zwischen einer neutralen Position (STOP) und einer dritten Position (START) durch eine zweite Position (ON) zu drehen,
- ein Betriebsorgan (102), wobei es sich um einen Nocken (102) handelt, der ausgelegt ist, um in Drehung mit dem Schloss (101) befestigt zu sein, um die Betriebsfunktion gemäß der Position des Schlosses zu aktivieren, und
- ein Rückschlagsystem (103) nach einem der vorhergehenden Ansprüche, das konfiguriert ist, um mit dem Betriebsorgan (102) zusammenzuarbeiten, um das Betriebsorgan daran zu hindern, eine Betriebsposition zu erreichen.

9. Diebstahlsicherung nach dem vorherigen Anspruch, wobei der Nocken (102) eine Längsachse aufweist und die Aufnahmefläche zwei verschiedene Wege aufweist, um den Verlauf der Steuervorrichtung aufzunehmen, wobei die zwei Wege gemäß der Längsachse gegeneinander angeordnet sind.

## Revendications

1. Système anti-retour (103) destiné à empêcher qu'un organe de fonctionnement (102) d'un véhicule automobile n'atteigne une position de fonctionnement, ledit système anti-retour (103) comprenant une surface de réception (104) composée d'au moins une paroi de l'organe de fonctionnement (102) et un dispositif de commande (106) destiné à coagir avec ladite surface de réception (104) de sorte à empêcher que l'organe de fonctionnement (102) n'atteigne une position de fonctionnement, dans lequel ledit système anti-retour (103) comprend aussi un moyen élastique (110) porté par un support (111) et configuré pour coagir avec le dispositif de commande (102) par l'application d'au moins deux forces perpendiculaires (121, 122) sur le dispositif de commande (106) en vue d'établir un contact permanent entre ledit dispositif de commande (106) et la surface de réception (104), dans lequel le support (111) du moyen élastique (110) est fixé au dispositif de commande (106) par des moyens de fixation (130, 131) permettant le mouvement relatif entre ledit dispositif de commande (106) et ledit support (111) et les moyens de fixation (130, 131) comprennent un trou allongé (130) associé à une broche (131) capable de traverser ledit trou (130).

2. Système anti-retour (103) selon la revendication 1, dans lequel le contact permanent entre le dispositif de commande (106) et la surface de réception (104) forme sensiblement une ligne ou un plan.

3. Système anti-retour (103) selon la revendication 2, dans lequel le dispositif de commande (106) présente une forme sphérique, cubique ou allongée.

4. Système anti-retour (103) selon l'une quelconque des revendications précédentes, dans lequel l'au moins un moyen élastique (110) est en contact avec le dispositif de commande (106) par au moins un contact de surface et/ou plusieurs contacts ponctuels.

5. Système anti-retour (103) selon l'une quelconque des revendications précédentes, dans lequel chaque moyen élastique (110) comprend un ou plusieurs ressorts, spécialement un ressort en épingle.

6. Système anti-retour (103) selon la revendication précédente, dans lequel le trou (130) est placé au travers du dispositif de commande (106) et la broche (131) est placée sur le support (111).

7. Système anti-retour (103) selon la revendication précédente, dans lequel il est constitué par le dispositif de commande (106) coagissant avec la surface de réception (104), le support (111) et le moyen élastique (110).

8. Dispositif antivol pour un verrou de colonne de direction d'un véhicule automobile comprenant :
- un verrou (101) qui est capable de tourner entre une position neutre (STOP) et une troisième position (START) en passant par une deuxième position (ON),
- un organe de fonctionnement (102) étant une came (102) destinée à être fixée en rotation avec le verrou (101) pour l'activation de la fonction de fonctionnement selon la position du verrou, et
- un système anti-retour (103) selon l'une quelconque des revendications précédentes configuré de sorte à coagir avec l'organe de fonctionnement (102) pour empêcher que ledit organe de fonctionnement n'atteigne une position de fonctionnement.

9. Dispositif antivol selon la précédente revendication, dans lequel la came (102) comprend un axe longitudinal et la surface de réception comprend deux différentes voies de réception de la course du dispositif de commande, lesdites deux voies étant agencées l'une contre l'autre selon l'axe longitudinal.
